# EUROPÄISCHE PATENTSCHRIFT

(11) **EP 1 650 457 B1**
(45) Veröffentlichungstag und Bekanntmachung des Hinweises auf die Patenterteilung: **02.05.2007**
(21) Anmeldenummer: 05018648.5
(22) Anmeldetag: 27.08.2005
(51) Int. Cl.: F16D 23/06

(54) **Schaltvorrichtung**
Gear-shifting device
Système de changement de vitesse

(30) Priorität: 22.10.2004 DE 102004051421
(43) Veröffentlichungstag der Anmeldung: 26.04.2006
(73) Patentinhaber: Schaeffler KG, 91074 Herzogenaurach (DE)
(72) Erfinder: Helm, Bernd, 91480 Markt Taschendorf (DE); Kuhse, Frank, 33649 Bielefeld (DE)

(56) Entgegenhaltungen:
- DE-A1- 2 141 261
- DE-A1- 2 510 657
- DE-C1- 4 404 093
- US-A- 4 059 178

## Beschreibung

### Gebiet der Erfindung

Die Erfindung betrifft eine Vorrichtung zum Schalten zweier Gangräder mittels einer aus einer neutralen Stellung in Richtung der Gangräder verschiebbaren Schiebemuffe, welche Zähne zum Eingriff aufweist, die teilweise mit einer Riegelnut versehen sind, wobei die Vorrichtung mit wenigstens je einem Synchronring pro Gangrad für ein Synchronisieren von Drehzahlen des Gangrads versehen ist, mit mindestens einem durch die Schiebemuffe in Richtung der Gangräder verschiebbaren Druckstück, das in Neutralstellung der Schiebemuffe in die Riegelnut eingreift und der Synchronring zum Ansynchronisieren zumindest begrenzt mittels des Druckstücks in Richtung des Gangrads verschiebbar in der Vorrichtung angeordnet ist.

### Hintergrund der Erfindung

Derartige Schiebemuffen sind in der Regel als Kupplungselemente in Synchronisiereinrichtungen von modernen handgeschalteten Kraftfahrzeuggetrieben eingesetzt. Sie verbinden eine Getriebewelle verdrehfest mit einem auf der Getriebewelle drehbar gelagerten Gangrad. Dabei sitzt die Schiebemuffe konzentrisch zur Getriebewelle angeordnet, verdrehfest und in Längsrichtung der Getriebewelle verschiebbar sowie mit einem Gangrad kuppelbar auf einem Synchronkörper.

Schiebemuffen gibt es in den verschiedensten Ausführungen. Zumeist weisen sie an ihrer Innenmantelfläche eine nach innen weisende Verzahnung auf, die in eine Gegenverzahnung des Synchronkörpers und im geschalteten Zustand in eine Verzahnung des Gangrades eingreift. Am Außenumfang der Schiebemuffe ist eine Führung für eine Schaltgabel vorgesehen. Mit der Schaltgabel wird die Schiebemuffe in Längsrichtung auf dem Synchronkörper verschoben, bis sie mit dem Zahnrad verbunden oder wieder zurück in ihre Neutralstellung bewegt ist.

In der Neutralstellung werden die Schiebemuffen oft axial durch ein Rastelement gehalten, das im Synchronkörper aufgenommen ist und zumeist federbelastet auf eine Ausnehmung wirkt. Die Ausnehmung ist, je nach Ausführung der Rastierung, an einzelnen oder allen nach innen gerichteten Zähnen der Schiebemuffe ausgebildet. Das Rastelement bewirkt, dass die Schiebemuffe erst nach dem Überwinden eines definierten Widerstandes durch die Bedienperson, beim Schalten des Ganges, axial bewegt werden kann und sich nicht unbeabsichtigt und selbsttätig in axiale Richtung verschiebt. Um verschiedene Rastpunkte, z. B. für eine Neutral- und eine Raststellung, festzulegen oder Verschiebekräfte und Kraftverläufe unterschiedlicher Höhe zu definieren, sind häufig zwei oder mehr Ausnehmungen in Längsrichtung des Zahnes hintereinander angeordnet.

Neben oder unabhängig von den vorgenannten Rastelementen wirken bei anderen Synchronisiereinrichtungen auf die Ausnehmungen des nach innen gerichteten Zahnes Druckstücke oder Sperrelemente. Die Druckstücke dienen als Betätigungselement für den Prozess der Vorsynchronisierung. Bei axialem Verschieben der Schiebemuffe werden die Druckstücke axial durch diese mitgenommen. Dabei leiten sie den Prozess der Synchronisation ein, indem sie auf zwischen dem Gangrad und dem Synchronkörper angeordnete Synchronringe wirken.

Von den Ausnehmungen abgesehen weist die Zahnkontur eine glatte Oberfläche auf. Bei einem Gangwechsel wird die Schiebemuffe aus der Neutralstellung oder aus einer zweiten Endstellung in eine erste Endstellung verschoben, wobei die Schiebemuffe über das Druckstück in einem ersten Bewegungsschritt die Ansynchronisation, ein Angleichen der unterschiedlichen Drehzahlen zwischen dem Gangrad und dem Synchronkörper, einleitet.

Bei zunehmendem, laufzeitbedingtem Verschleiß der Synchronisiereinrichtung kann das Druckstück im geschalteten Zustand der Schiebemuffe immer weiter in den Endbereich des Riegelnutzahns gelangen. Dies führt schließlich dazu, dass im Extremfall das Druckstück über den Endbereich des Riegelnutzahns hinaus gelangt, sich an der Zahnkante abstützt und somit beim Auslegen des Gangs in Richtung des gegenüberliegenden Synchronringpakets geschoben wird. Dies führt zu einer ständigen, ungewünschten Ansynchronisation des nicht eingelegten Gangs und folglich zu einem Verschleiß der Vorrichtung. Begünstigt wird ein derartiger Effekt umso mehr, wenn der Riegelnutzahn so geformt ist, dass er stirnseitig ein leicht abfallendes Profil aufweist.

Die Ausnehmung, in der sich das Druckstück in der Neutralstellung befindet, dient dazu, dem Bediener eine haptische Rückmeldung beim Durchschalten der Neutralstellung zu vermitteln. Sie ist insbesondere nicht dafür vorgesehen, das Druckstück fest zu führen. Um bei einem laufzeitbedingtem Verschleiß das Problem der ungewollten Ansynchronisation zu vermeiden, ist in der EP 508 639 B1 vorgeschlagen, in der Schiebemuffe mehrere Rast- oder Halteausnehmungen vorzusehen. Nachteilig an dieser Lösung ist aber, dass einerseits auch diese Rastausnehmungen einem Verschleiß ausgesetzt sind, andererseits der Konturverlauf aufwändig zu fertigen ist.

### Aufgabe der Erfindung

Der Erfindung liegt deshalb die Aufgabe zugrunde, eine Vorrichtung zu schaffen, bei der die vorstehend genannten Nachteile beseitigt sind.

### Zusammenfassung der Erfindung

Erfindungsgemäß wird diese Aufgabe nach den Merkmalen des kennzeichnenden Teils des Anspruchs 1 dadurch gelöst, dass die mit der Riegelnut versehenen Zähne an ihrem axialen Ende eine Sperrstufe aufweisen. Erfolgt bei der erfindungsgemäßen Schiebemuffe ein Gangwechsel aus der Neutralstellung oder aus einer zweiten Endstellung in eine erste Endstellung, so kann das Rastelement sich auf dem Riegelnutzahn bewegen, aber nicht über die Sperrstufe hinaus. Damit kann es insbesondere nicht den nicht eingelegten Gang ansynchonisieren, indem es sich an einer Kante des Riegelnutzahns abstützt.

Die Sperrstufe ermöglicht es auch, die Form der Riegelnut in axialer Richtung zu variieren. Sie kann beispielsweise ein zu den Stirnseiten hin abfallendes Profil aufweisen, ohne dass die Gefahr besteht, dass das Rastelement durch Spiel und Vibrationen über die Schiebemuffe hinaus wandert.

Eine besonders vorteilhafte Ausführung der Erfindung ist es, die Sperrstufe als einen nach radial innen vorstehenden Vorsprung auszubilden, der fertigungstechnisch leicht realisiert werden kann. Insbesondere bei spanlos hergestellten Schiebemuffen kann er einfach und kostengünstig durch einen Prägevorgang in den Riegelnutzahn eingebracht werden. Alternativ sind aber auch beispielsweise Biege-, Walz- oder Stanzverfahren zur Herstellung des Vorsprungs denkbar.

Damit die Sperrstufe die von der Rastkugel auf sie einwirkenden Kräfte optimal aufnehmen kann, sieht eine weitere Ausgestaltung der Erfindung vor, den Vorsprung derart auszubilden, dass seine Oberfläche nach axial innen gesehen einem negativen Abdruck des Rastelements entspricht, so dass im Falle seines seitlichen Auswanderns die von diesem ausgeübte Kraft möglichst gleichmäßig auf den Vorsprung verteilt wird.

Der erfindungsgemäße Vorsprung ist fertigungstechnisch einfach und somit auch kostengünstig herzustellen. Einer aufwändig zu fertigen Kontur bedarf es nicht.

### Kurze Beschreibung der Zeichnungen

Die Erfindung wird nachfolgend anhand von einem Ausführungsbeispiel näher erläutert. Die dazugehörigen Zeichnungen zeigen dabei:
- Figur 1: einen Längsschnitt eines Teils einer Synchronisiervorrichtung,
- Figur 2: einen Längsschnitt einer erfindungsgemäßen Schiebemuffe einer Synchronisiervorrichtung,
- Figur 3: eine perspektivische Schrägansicht auf einen Ausschnitt einer weiteren erfindungsgemäßen Schiebemuffe.

### Ausführliche Beschreibung der Zeichnungen

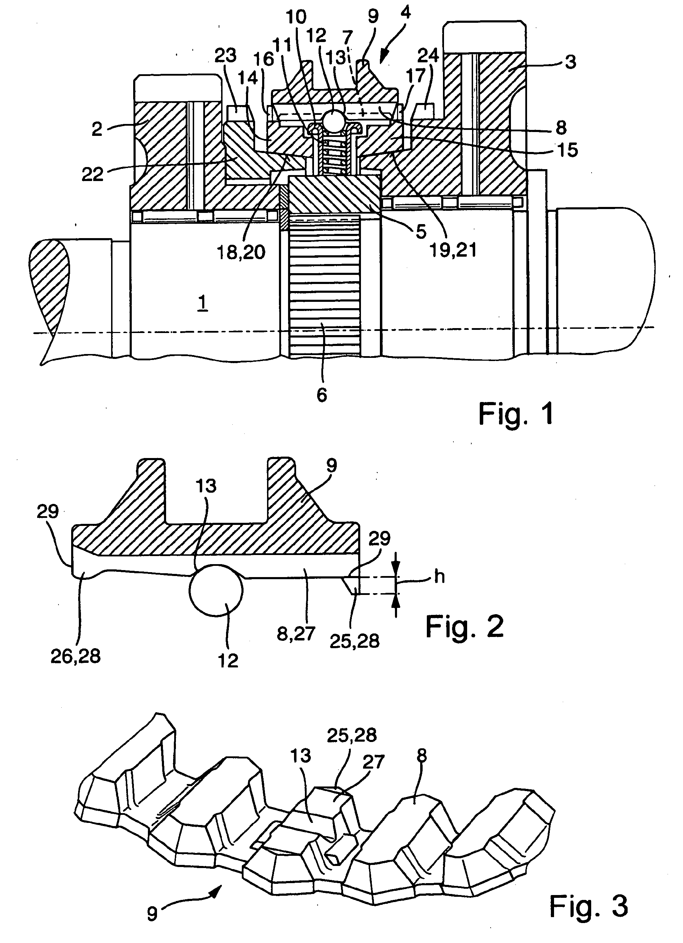

In Figur 1 ist mit 1 eine Welle eines Schaltgetriebes für Kraftfahrzeuge bezeichnet, auf welcher zwei Gangräder 2 und 3 frei drehbar gelagert sind. Zwischen diesen beiden Gangrädern 2 und 3 ist eine Synchronisiereinrichtung 4 angeordnet, über welche wahlweise eines der beiden Gangräder 2 oder 3 an die Welle 1 kuppelbar ist. Auf diese Weise wird das Schaltgetriebe in unterschiedliche Übersetzungsstufen geschaltet.

Die Synchronisiereinrichtung 4 weist einen Synchronkörper 5 auf, der drehfest in eine Verzahnung 6 der Welle 1 eingreift. Weiterhin ist der Synchronkörper 5 an seinem äußeren Umfang mit einer Außenverzahnung 7 versehen, in welche Zähne 8 einer Innenverzahnung einer Schiebemuffe 9 eingreifen. Im Synchronkörper 5 ist weiterhin ein Druckstück 10 mit einer Druckfeder 11 geführt, das ein kugelförmiges, in Längsrichtung über das Druckstück 10 vorstehendes Rastelement 12 aufnimmt. Das kugelförmige Rastelement 12 ragt dabei aus dem Synchronkörper 5 bis etwa zum Kopfkreis der Außenverzahnung 7 vor. In einer Neutralstellung der Synchronisiereinrichtung 4, in der keine der beiden möglichen Gangstufen geschaltet ist und sich somit die beiden Gangräder 2 und 3 frei gegenüber der Welle 1 drehen, greift das Rastelement 12 in eine in der Innenverzahnung 8 der Schiebemuffe 9 ausgebildete Riegelnut 13 eines Riegelnutzahns 27 (Figur 3) ein.

Beiderseits des Druckstücks 10 sind Synchronringe 14 und 15 angeordnet, die außen eine Sperrverzahnung 16 bzw. 17 und innen eine Reibfläche 18 bzw. 19 aufweisen. Die Reibflächen 18 und 19 der Synchronringe 14 und 15 wirken zusammen mit entsprechend ausgebildeten Reibflächen 20 und 21, welche am Gangrad 3 sowie an einem drehfest mit dem Gangrad 2 verbundenen Kupplungsring 22 ausgebildet sind.

Während eines Schaltvorgangs wird bei einer entsprechenden Sperrsynchronisierung über das Druckstück 10 zunächst während des Ansynchronisierens eine axiale Kraft auf den jeweiligen Synchronring 14 oder 15 ausgeübt, so dass dieser über seine Reibfläche 18 oder 19 von der entsprechenden Reibfläche 20 oder 21 mitgenommen und gegenüber dem Synchronkörper um einen bestimmten Winkel verdreht wird. In dieser Lage sperrt die Sperrverzahnung 16 eine weitere Verschiebung der Schiebemuffe 9. Diese Sperrwirkung wird erst dann aufgehoben, wenn Gleichlauf zwischen dem jeweiligen Gangrad 2 bzw. 3 und der Welle 1 erzielt ist. In diesem Moment wird die Innenverzahnung 8 der Schiebemuffe 9 durch die Sperrverzahnung 16 bzw. 17 hindurchbewegt und gelangt schließlich in Eingriff in einer Kuppelverzahnung 23 bzw. 24.

Die erfindungsgemäße Ausbildung des Schiebemuffe 9 kann den Figuren 2 und 3 entnommen werden. Während einer Schaltbewegung der Schiebemuffe 9 wird zunächst das Rastelement 12 von dieser mitgenommen und übt über das Druckstück 10 eine axiale Kraft auf den jeweiligen Synchronring 14 bzw. 15 aus. Nach dem Erreichen des Gleichlaufs rastet das Rastelement 12 aus der Riegelnut 13 aus und bewegt sich auf dem Riegelnutzahn 27. Die Bewegung des Rastelements 12 auf dem Riegelnutzahn 27 wird durch nach außen hin durch Sperrstufen 28 begrenzt. Dadurch kann das Rastelement 12 sich nicht über den Riegelnutzahn 27 hinaus bewegen und somit auch nicht hinter dem Riegelnutzahn 27 verschnappen.

Die Sperrstufe 28 ist als ein nach radial innen vorstehender Vorsprung 25, 26 ausgebildet. Prinzipiell eignen sich verschiedene Ausbildungsformen, insbesondere quaderförmige oder pyramidenstumpfartige Vorsprünge 26. Der Vorsprung 25 besitzt einen dem Radius des Rastelements 12 angepassten Negativradius. Dadurch liegt das Rastelement 12 in der Endposition gleichmäßig am Vorsprung 25 an, wodurch Kraftspitzen, die bei dem Vorsprung 26 entlang einer Auflagelinie entstehen, vermieden werden. Eine weitere Möglichkeit, eine unerwünschte Verformung der Vorsprünge 25, 26 zu vermeiden, ist es, diese zu härten. Dabei können alle üblichen Härteverfahren zum Einsatz kommen.

Um die Bauhöhe h der Sperrstufe 28 zu verringern, kann der Riegelnutzahn 27 zu seinen axialen Enden 29 leicht abfallend ausgebildet sein. Eine derartige Kontur ist ohne Vorsprung nicht zu realisieren, da diese das unerwünschte seitliche Auswandern des Rastelements 12 von dem Riegelnutzahn 27 sehr begünstigt.

### Bezugszahlenliste

- 1: Welle
- 2: Gangrad
- 3: Gangrad
- 4: Synchronisiereinrichtung
- 5: Synchronkörper
- 6: Verzahnung
- 7: Außenverzahnung von 5
- 8: Zähne von 9
- 9: Schiebemuffe
- 10: Druckstück
- 11: Druckfeder
- 12: Rastelement
- 13: Riegelnut
- 14: Synchronring
- 15: Synchronring
- 16: Sperrverzahnung
- 17: Sperrverzahnung
- 18: Reibfläche von 14
- 19: Reibfläche von 15
- 20: Reibfläche
- 21: Reibfläche
- 22: Kupplungsring
- 23: Kuppelverzahnung
- 24: Kuppelverzahnung
- 25: Vorsprung
- 26: Vorsprung
- 27: Riegelnutzahn
- 28: Sperrstufe
- 29: axiales Ende
- h: Bauhöhe des Vorsprungs

## Patentansprüche

1. Vorrichtung zum Schalten mindestens eines Gangrads (2, 3) mittels einer aus einer neutralen Stellung in Richtung des Gangrads (2, 3) verschiebbaren Schiebemuffe (9), welche Zähne (8) zum Eingriff aufweist, die als Riegelnutzähne (27) teilweise mit einer Riegelnut (13) versehen sind, wobei die Vorrichtung mit wenigstens je einem Synchronring (14, 15) pro Gangrad (2,3) für ein Synchronisieren von Drehzahlen des Gangrads (2, 3) versehen ist, mit mindestens einem durch die Schiebemuffe (9) in Richtung des mindestens einen Gangrads (2, 3) verschiebbaren Druckstück (10), das in Neutralstellung der Schiebemuffe (9) in die Riegelnut (13) eingreift und der Synchronring (14, 15) zum Ansynchronisieren zumindest begrenzt mittels des Druckstücks (10) in Richtung des Gangrads (2, 3) verschiebbar in der Vorrichtung angeordnet ist, **dadurch gekennzeichnet, dass** die mit der Riegelnutzähne (27) an ihrem axialen Ende (29) eine Sperrstufe (28) aufweisen.

2. Vorrichtung nach Anspruch 1, **dadurch gekennzeichnet, dass** die Sperrstufe (28) als ein radial nach innen vorstehender Vorsprung (25, 26) ausgebildet ist.

3. Vorrichtung nach Anspruch 2, **dadurch gekennzeichnet, dass** der Vorsprung (25, 26) axialsymmetrisch ausgebildet ist und seine nach innen weisende Negativkontur einen Radius aufweist, der dem des Druckstücks (10) entspricht.

4. Vorrichtung nach Anspruch 2, **dadurch gekennzeichnet, dass** der Vorsprung (25, 26) quaderförmig ausgebildet ist.

5. Vorrichtung nach Anspruch 1, **dadurch gekennzeichnet, dass** die Sperrstufe (28) gehärtet ist.

## Claims

1. Device for selecting at least one gearwheel (2, 3) with the help of a sliding sleeve (9) that can be displaced out of a neutral position in the direction of the gearwheel (2, 3), said sliding sleeve (9) comprising teeth (8) for engagement that are configured as locking groove teeth (27) and are partially provided with a locking groove (13), said device being provided with at least one synchroniser ring (14, 15) per gearwheel (2, 3) for a synchronisation of the speeds of rotation of the gearwheel (2, 3), and being further provided with at least one thrust member (10) that can be displaced by the sliding sleeve (9) in the direction of the at least one gearwheel (2, 3) and engages into the locking groove (13) in the neutral position of the sliding sleeve (9), and the synchroniser ring (14, 15), for initiating the synchronisation process, being arranged in the device for being displaced, at least to a limited extent, by the pressure member (10) in the direction of the gearwheel (2, 3) **characterised in that** the teeth (27) provided with the locking groove comprise a barrier shoulder (28) on their axial end (29).

2. Device according to claim 1, **characterised in that** the barrier shoulder (28) is configured as a projection (25, 26)) protruding radially inwards.

3. Device according to claim 2, **characterised in that** the projection (25, 26) has an axisymmetrical configuration and its inwards pointing negative contour has a radius corresponding to that of the pressure member (10).

4. Device according to claim 2, **characterised in that** the projection (25, 26) is configured in the form of a right parallelepiped.

5. Device according to Claim 1, **characterised in that** the barrier shoulder (28) is hardened.

## Revendications

1. Dispositif pour la sélection d'au moins une roue dentée (2, 3) au moyen d'un manchon coulissant (9) qui peut être déplacé en direction de la roue dentée (2, 3) à partir d'une position neutre, ledit manchon coulissant (9) comprenant des dents (8) pour l'engagement, lesquels dents (8), en étant configurées sous la forme de dents (27) à rainure de verrouillage, sont munies, au moins partiellement, d'une rainure de verrouillage (13), ledit dispositif étant muni d'au moins un anneau de synchronisation (14, 15) par roue dentée (2, 3) pour une synchronisation de vitesses de rotation de la roue dentée (2, 3), ledit dispositif étant muni, en plus, d'au moins un membre de la poussée (10) qui peut être déplacé en direction de l'au moins une roue dentée (2, 3) par le manchon coulissant (9), ledit membre de la poussée (10) s'engageant, dans la position neutre du manchon coulissant (9), dans la rainure de verrouillage (13), et l'anneau de synchronisation (14, 15) étant agencé dans le dispositif en étant déplaçable, au moins de manière limitée, par le membre de la poussée (10) en direction de la roue dentée (2, 3) pour amorcer le synchronisation, **caractérisé en ce que** les dents (27) à rainure de verrouillage comprennent, à leur extrémité axiale (29), un gradin de blocage (28).

2. Dispositif selon la revendication 1, **caractérisé en ce que** le gradin de blocage (28) est configuré sous la forme d'une saillie (25, 26) orientée radialement vers l'intérieur.

3. Dispositif selon la revendication 2, **caractérisé en ce que** la saillie (25, 26) a une configuration axialement symétrique et son contour négatif orienté vers l'intérieur a un rayon qui correspond à celui du membre de la poussée (10).

4. Dispositif selon la revendication 2, **caractérisé en ce que** la saillie (25, 26) est configurée sous la forme d'un parallélépipède.

5. Dispositif selon la revendication 1, **caractérisé en ce que** le gradin de blocage (28) est durci.
